Europäisches Patentamt

(19) European Patent Office

Office européen des brevets

(11) Numéro de publication: **0 208 640**

**B1**

(12) **FASCICULE DE BREVET EUROPÉEN**

(45) Date de publication du fascicule du brevet: **04.10.89**

(21) Numéro de dépôt: **86440040.3**

(22) Date de dépôt: **28.05.86**

(51) Int. Cl.⁴: **C 12 C 13/00**, F 16 K 11/00, B 67 D 5/60

(54) **Dispositif de branchement pour la mise en service de récipients de grande contenance d'une installation de stockage et/ou de traitement de liquides alimentaires ou autres.**

(30) Priorité: **03.06.85 FR 8508435**

(43) Date de publication de la demande: **14.01.87 Bulletin 87/3**

(45) Mention de la délivrance du brevet: **04.10.89 Bulletin 89/40**

(84) Etats contractants désignés: **AT BE CH DE GB IT LI LU NL SE**

(56) Documents cité:
**GB-A-2 077 759**
**US-A-2 448 933**
**US-A-4 396 036**

(73) Titulaire: **INSTITUT FRANCAIS DES BOISSONS DE LA BRASSERIE MALTERIE (Association régie par la loi de 1901), 1, rue Grandville, F-54000 Nancy (FR)**

(72) Inventeur: **Millet, Pierre, 7, rue du Bois de la Champelle, F-54500 Vandoeuvre (FR)**

(74) Mandataire: **Aubertin, François, Cabinet Lepage & Aubertin Innovations et Prestations 4, rue de Haguenau, F-67000 Strasbourg (FR)**

LIBER, STOCKHOLM 1989

## Description

L'invention concerne un dispositif de branchement pour la mise en service de récipients de grande contenance d'une installation de stockage et/ou de traitement de liquides alimentaires, notamment de bière, cette installation comportant par ailleurs un réseau de conduites de liaison entre lesdits récipients et des appareillages effectuant les fonctions desdits récipients.

On connaît déjà deux principales techniques pour servir des récipients de grande contenance généralement groupés en cave, et utilisés principalement dans l'industrie alimentaire pour la fabrication, le traitement ou le stockage de liquides alimentaires, tels que la bière, le lait ou autres.

En effet, ces récipients de grande contenance nécessitent d'être connectés au cours de leur utilisation, à divers postes fournissant des fonctions telles que le lavage desdits récipients, leur remplissage, leur vidange, leur connexion à des dispositifs de filtrage, ou encore, leur asservissement à des dispositifs de mise en pression ou d'échappement des gaz, etc.

La première technique employée pour la connexion entre les récipients d'une cave et les postes assurant les fonctions énumérées ci-dessus, consiste à faire appel à un opérateur qui effectue les branchements manuellement, ce qui entraîne, d'une part, des risques d'erreur dans les branchements et, d'autre part, des difficultés de manipulation, compte tenu de la longueur et du diamètre souvent importants des conduites souples à raccorder.

Une technique plus évoluée (brevet anglais n° 2 077 759 A) consiste à solidariser ces récipients de grande contenance avec un système de vannes automatiques plus ou moins sophistiqué permettant de créer un réseau de distribution d'alimentation et de vidange totale ou partielle des récipients. Cette grille de vannes automatiques destinée à remplacer l'ouvrier est alors commandée à partir d'un pupitre, ce qui est nettement plus aisé, mais ne supprime pas les risques d'erreur d'aiguillage, ce qui peut s'avérer catastrophique pour le contenu des récipients. D'autre part, cette technique n'exclut pas, dans le cas d'un défaut d'étanchéité d'une vanne, la possibilité d'interpénétration de différents fluides, par exemple de la bière avant et après fermentation.

Par ailleurs, le prix d'une telle grille de vannes automatiques est un autre inconvénient majeur lié à cette technique. En effet, un réseau de vannes complet nécessite l'utilisation d'un nombre important de vannes pouvant aller jusqu'à vingt vannes automatiques par récipient. De plus, chacune de ces vannes automatiques comporte un détecteur de fuite, ce qui augmente la complexité et porte couramment son prix unitaire à une somme de l'ordre de quarante mille francs, dès qu'on atteint des diamètres de tuyauterie de l'ordre de cent cinquante millimètres, comme c'est le cas notamment dans la brasserie, où le nombre et la taille des conduites à raccorder sont les plus importants.

La présente invention a pour but de remédier à ces inconvénients. L'invention telle qu'elle est caractérisée dans les revendications résout le problème consistant à créer un dispositif de branchement automatique entre les récipients d'une cave, notamment de brasserie, et les servitudes de ces récipients, ce dispositif de branchement automatique comportant des moyens de positionnement des extrémités d'un ensemble de conduites de liaison reliant des récipients à des appareillages fournissant des fonctions de servitude et d'utilisation auxdits récipients, et des moyens de raccordement automatique entre les orifices desdites conduites.

Les avantages obtenus grâce à cette invention consistent essentiellement en ceci que les diverses fonctions de servitude et/ou d'utilisation peuvent être amenées jusqu'aux récipients de stockage des liquides alimentaires, sans que des fuites, et surtout des interpénétrations indésirables entre les liquides, ne puissent se produire. En outre, la structure du dispositif de branchement selon l'invention est suffisamment simple pour permettre la réalisation de branchements fiables et à faible coût, entre les récipients.

L'invention est exposée ci-après plus en détail à l'aide de dessins représentant seulement un mode d'exécution.

La figure 1 représente en vue schématique, une cave utilisant des récipients de grande contenance et des dispositifs de branchement automatique conformes à l'invention.

La figure 2 représente en vue en élévation selon la direction I - I, le dispositif de branchement automatique de la figure 4.

La figure 3 représente en vue en élévation selon la direction II - II, le dispositif de branchement automatique de la figure 5.

La figure 4 représente en vue en plan partiellement en coupe, un dispositif de branchement automatique conforme à l'invention.

La figure 5 représente en vue en plan partiellement en coupe, un autre mode de réalisation d'un dispositif de branchement automatique conforme à l'invention.

La figure 6 représente en vue schématique, un autre mode de réalisation de l'installation utilisant le dispositif conforme à l'invention.

La figure 7 représente en vue schématique, un autre mode de réalisation de l'installation utilisant le dispositif conforme à l'invention.

La figure 8 représente en vue en élévation, un autre mode de réalisation d'un dispositif de branchement automatique tel que ceux utilisés sur la figure 7.

La figure 9 représente en vue en élévation selon la direction III - III, le dispositif de branchement automatique de la figure 8.

Une cave, notamment une cave de brasserie telle que schématisée sur les figures, comporte essentiellement un certain nombre de récipients 1 de grande contenance permettant de stocker des liquides alimentaires tels que la bière, ou des liquides intermédiaires apparaissant lors de la fermentation ou pendant une autre étape de la fabrication et du stockage.

Chaque récipient 1 comporte un certain nombre de conduites 2 d'alimentation ou d'évacuation de liquides ou de gaz, qui peuvent être par exemple des conduites destinées aux servitudes des récipients (mise en pression ou échappement des gaz, arrivée de liquides de lavage...) ou des conduites destinées aux fonctions d'utilisation des récipients, c'est-à-dire l'amenée ou l'évacuation des produits et liquides utilisés pour la fabrication de la bière.

Pour que les différentes étapes de la fabrication et/ou du stockage puissent avoir lieu dans le temps sans interférer entre-elles, les récipients 1 sont pourvus d'un certain nombre de vannes 3 qui sont les unes ouvertes, les autres fermées, en fonction de l'étape en cours.

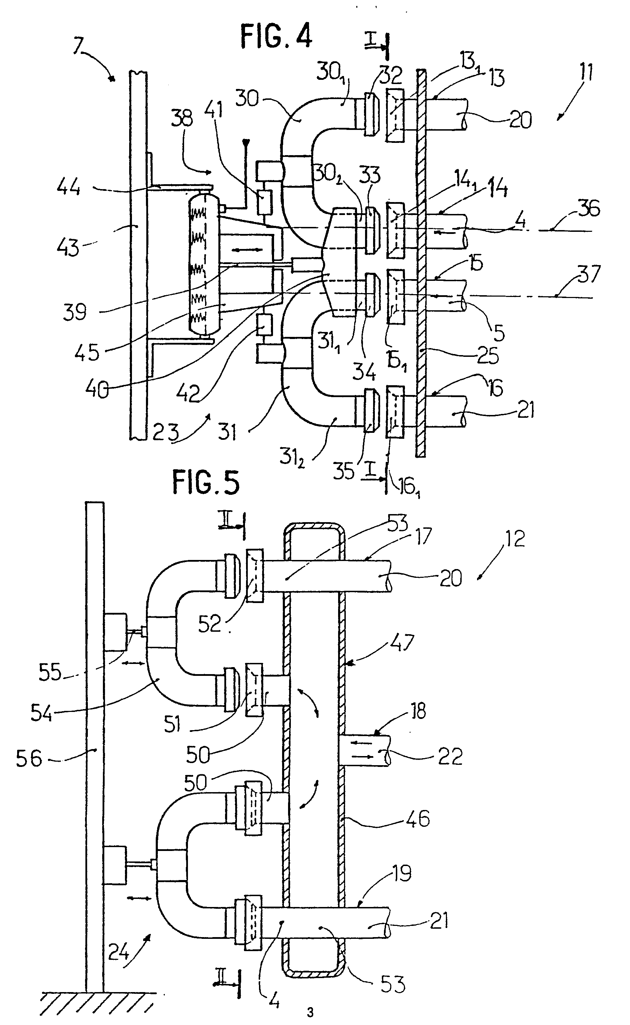

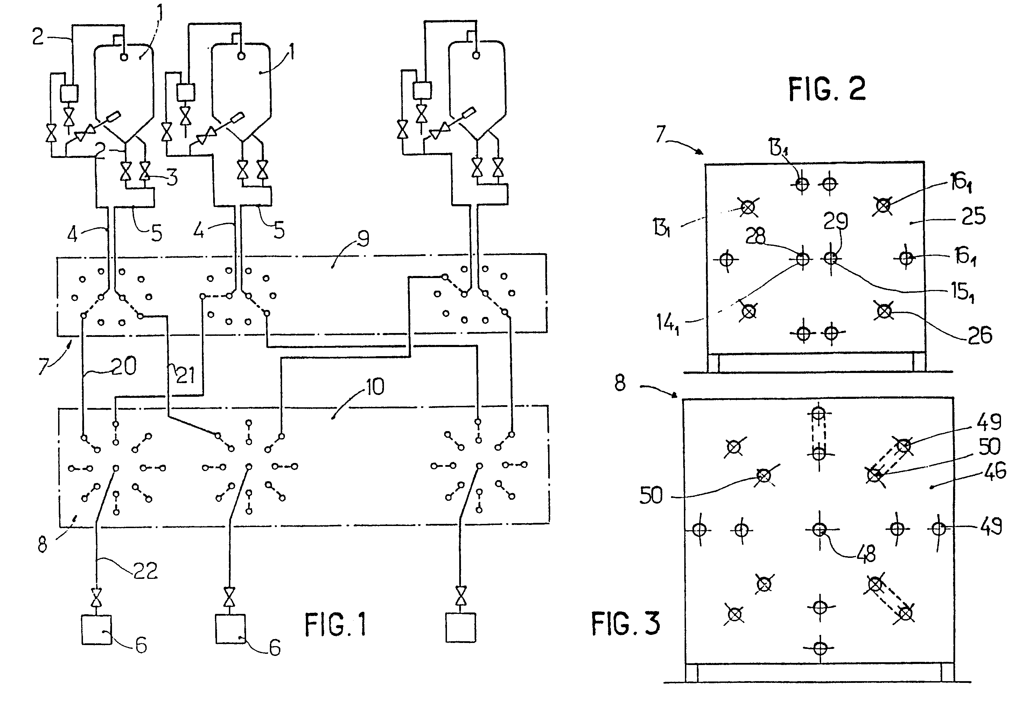

De plus, dans le mode de réalisation particulier représenté figure 1, les conduites destinées aux servitudes se regroupent en une conduite unique 4 devant permettre le branchement à des postes fournissant les servitudes.

De même, les conduites destinées à l'acheminement des produits nécessaires à la fabrication de la bière, sont regroupées en une conduite unique 5, destinée à être connectée aux véritables fonctions des récipients 1, afin d'assurer la fabrication de la bière.

L'installation comporte également des postes 6 fournissant les servitudes ou les produits nécessaires à la fabrication. Ainsi, chaque poste 6 représente fournit une prestation particulière.

Cependant, au cours du fonctionnement de la cave, il est nécessaire de relier les postes 6 fournissant les servitudes ou les fonctions d'utilisation à différents récipients 1, soit simultanément, soit successivement. Cette fonction est assurée par un ensemble de dispositifs de branchement automatique 7 et 8 regroupés selon deux tableaux de pontage 9 et 10, disposés à des endroits déterminés de l'installation.

Afin de permettre le passage des fluides dans un sens et dans l'autre entre les postes 6 et les récipients 1, il est nécessaire de relier chaque récipient 1 à un dispositif de branchement automatique 7 du tableau de pontage 9, et de relier chaque poste 6 à un dispositif de branchement automatique 8 du tableau de pontage 10. De plus, chaque dispositif de branchement automatique 7 du tableau de pontage 9 doit être relié à un dispositif de branchement automatique 8 du tableau de pontage 10.

Ainsi, chaque récipient 1 peut être relié à un ou deux postes 6 fournissant une fonction de servitude telle que l'arrivée d'un fluide de lavage, et/ou une véritable fonction d'utilisation du récipient 1, telle que notamment le remplissage de celui-ci avec de la bière. Dans la forme de réalisation la plus générale de l'invention, telle que représentée figure 1, une même fonction issue du poste 6 doit pouvoir être distribuée simultanément à plusieurs récipients 1. De plus, un même récipient 1 doit pouvoir recevoir simultanément, par l'intermédiaire de la conduite 4, une fonction de servitude issue d'un poste 6, et, par l'intermédiaire de la conduite 5, une fonction d'utilisation issue d'un autre poste 6.

Ces impératifs nécessitent dans certains cas une configuration particulière des dispositifs de branchement 7 et 8 et des tableaux de pontage 9 et 10 tels que représentés figure 1. La structure de ces dispositifs de branchement automatique particuliers 7 et 8 sera bien comprise en se référant aux figures 2, 3, 4 et 5.

Dans leur principe général de fonctionnement, les dispositifs de branchement automatique 7 et 8 selon l'invention, comportent des moyens de positionnement 11 et 12 des extrémités 13, 14, 15, 16, 17, 18 et 19 des différentes conduites respectives 20, 4, 5, 21, 20, 22, 21.

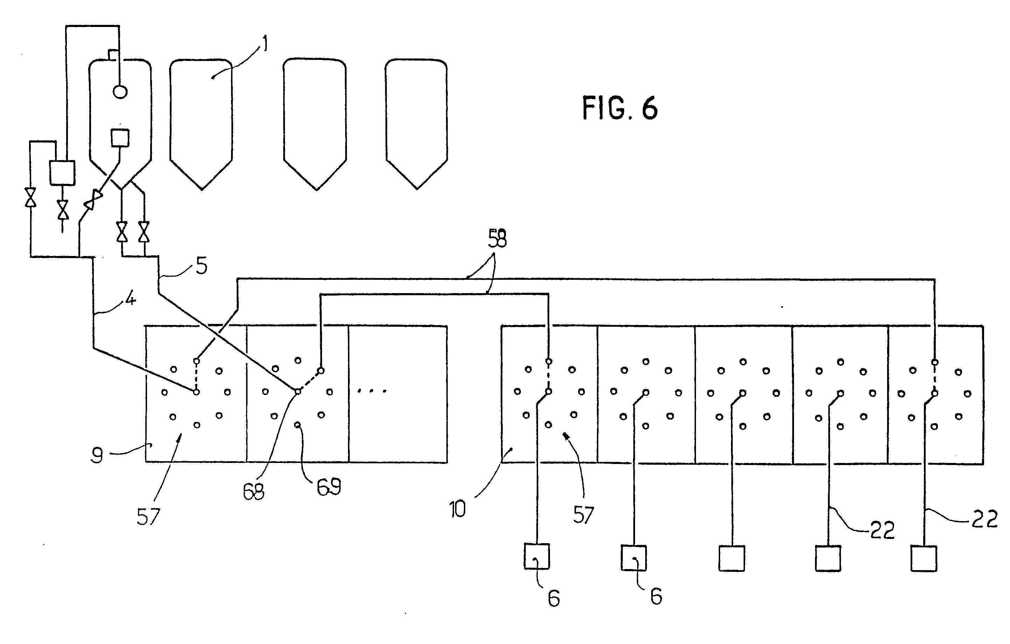

Les dispositifs de branchement automatique 7 et 8 représentés figures 4 et 5 comportent également des moyens de raccordement automatiques respectivement 23 et 24, permettant de raccorder deux à deux les orifices appartenant aux différentes conduites.

Plus précisément, le dispositif de branchement automatique 7 représenté figure 4 permet de raccorder, d'une part, l'extrémité 13 d'une conduite 20 avec l'extrémité 14 d'une conduite 4, et, d'autre part, l'extrémité 15 d'une conduite 5 avec l'extrémité 16 d'une conduite 21.

A cet effet, le dispositif de branchement automatique 7 se compose principalement d'un support 25 pourvu d'un certain nombre de trous 26, l'ensemble constituant les moyens de positionnement 11 des extrémités 13, 14, 15, 16 des différentes conduites 20, 4, 5 et 21.

Les extrémités 13, 14, 15 et 16 sont engagées et immobilisées dans lesdits trous 26 et positionnées dans un même plan vertical. Selon l'invention, les trous 26 sont disposés selon deux demi-cercles entourant deux trous centraux 28 et 29, de façon à ce que les trous disposés sur un premier demi-cercle puissent recevoir les extrémités des conduites 4 de servitude et que les trous disposés sur un second demi-cercle puissent recevoir les extrémités des conduites 5 assurant le transit des fonctions d'utilisation des récipients 1. De cette façon, les trous disposés sur un premier demi-cercle sont tous équidistants du trou 28, alors que les trous situés sur un deuxième demi-cercle sont tous équidistants du trou 29. Par conséquent, il est aisé de relier les différents trous périphériques au trou central qui leur correspond, par un même élément de liaison.

De ce fait, dans la réalisation décrite figure 4, les moyens de raccordement 23 sont constitués par deux éléments de raccordement 30 et 31 en forme de "U", destinés respectivement à relier les extrémités 13 et 14 d'une part, et les extrémités 15 et 16 d'autre part. A cet effet, chacune des branches $30_1$ et $30_2$ de l'élément de raccordement 30 est pourvue à son extrémité respectivement d'un clapet 32 et 33. De même, chacune des

branches $31_1$ et $31_2$ de l'élément de raccordement 31 est pourvue à son extrémité respectivement d'un clapet 34 et 35.

De ce fait, lorsqu'on applique les éléments de raccordement 30 et 31 sur les orifices $13_1$, $14_1$, $15_1$ et $16_1$ correspondant aux extrémités 13, 14, 15 et 16 telles que représentées figure 4, on réalise la liaison entre une conduite 20 et 4, d'une part, et entre une conduite 5 et 21, d'autre part, de façon à y permettre la circulation d'un fluide.

Cependant, pour assurer le branchement automatique entre la conduite 4 et l'une des conduites 20, et entre la conduite 5 et l'une des conduites 21, il est nécessaire de pouvoir animer les éléments de raccordement 30 et 31 d'un mouvement de rotation autour d'un axe de rotation respectivement 36 et 37, combiné avec un mouvement de translation parallèlement aux conduites 20, 4, 5 et 21. Ceci a pour effet de présenter le clapet 32 successivement devant l'un des orifices $13_1$ des conduites 20, alors que le clapet 33 demeure toujours en face de l'orifice $14_1$. De même, le clapet 34 demeurera toujours en face de l'orifice $15_1$, alors que le clapet 35 se présentera successivement devant l'un des orifices $16_1$, au cours du mouvement de l'élément de raccordement 31.

Bien entendu, il est nécessaire d'assurer le guidage et l'entraînement des éléments de raccordement 30 et 31, afin de permettre leur mouvement et leur branchement. A cet effet, le dispositif de branchement automatique 7 comporte des moyens moteurs 38 actionnant automatiquement les éléments de raccordement 30 et 31 en fonction des branchements à effectuer. Dans le mode de réalisation décrit figure 4, ces moyens moteurs 38 sont constitués, d'une part, par un vérin d'étanchéité 39 actionnant les éléments de raccordement 30 et 31 selon une translation parallèle aux différentes conduites 20, 4, 5, 21 par l'intermédiaire d'un élément de guidage 40. Lesdits moyens moteurs 38 sont constitués d'autre part par deux vérins de positionnement 41 et 42 permettant d'assurer la rotation des éléments de raccordement 30 et 31 autour de leur axe de rotation respectif 36 et 37.

Bien entendu, pour que le dispositif de branchement automatique 7 puisse fonctionner, les différents vérins 39, 41 et 42 sont solidaires d'un support 43 qui leur fournit un appui par l'intermédiaire des pièces de liaison 44 et 45.

Le dispositif est, en outre, pourvu de moyens quelconques de repérage, connus en soi et non représentés, permettant d'asservir la position des éléments de raccordement 30 et 31.

Ainsi, lors du fonctionnement d'un dispositif de branchement automatique 7 disposé sur le tableau de pontage 9, il est aisé d'établir une double liaison (conduites 4, 5, 20, 21) entre, d'une part, un récipient 1 et, d'autre part, deux dispositifs de branchement automatique 8 du tableau de pontage 10, eux-mêmes connectés au poste 6 tels que représentés figure 1.

Lors du fonctionnement de l'installation conforme à l'invention, il peut s'avérer nécessaire de fournir simultanément une même fonction issue d'un poste 6, à plusieurs récipients 1. Ceci suppose que les dispositifs de branchement automatique 8 du tableau de pontage 10 aient également une structure particulière, comme celle qui est représentée sur les figures 3 et 5. Ainsi, le dispositif de branchement automatique 8 est également pourvu de moyens de raccordement automatiques 24 composés par des éléments de raccordement 54 en forme de "U" permettant de relier deux à deux les orifices des conduites, et lesdits orifices sont répartis d'une façon particulière sur le support de positionnement 46 permettant de positionner les extrémités 17, 18 et 19 des conduites 20, 22 et 21.

A cet effet, le support de positionnement 46 est composé d'un corps creux 47 pourvu d'un trou 48 pour la liaison à un poste 6 par l'intermédiaire d'une conduite 22. Ce support de positionnement 46 est pourvu en outre de trous 49 disposés concentriquement au trou 48, et permettant la liaison avec les divers dispositifs de branchement automatique 7 par l'intermédiaire des conduites 20, 21.

Enfin, le support de positionnement 46 est pourvu de trous 50 également disposés concentriquement au trou 48, et pourvus de clapets 51. Ces clapets 51 sont situés dans le même plan vertical que les clapets 52 dont sont pourvues les extrémités 53 des conduites 20, 21. Ainsi, il est aisé de relier deux à deux les conduites positionnées respectivement dans les trous 49 et 50, par un ensemble d'éléments de raccordement 54 en forme de "U". Bien entendu, le dispositif de branchement automatique 8 comporte autant d'éléments de raccordement 54 qu'il y a de paires de trous 49, 50.

Selon l'invention, ces éléments de raccordement 54, qui ne nécessitent pas dans ce cas d'être actionnés en rotation, sont simplement déplacés en translation parallèlement aux différentes conduites 20, 21 par l'intermédiaire de vérins 55, solidaires d'un support 56.

Lors du fonctionnement du dispositif de branchement automatique 8, un fluide issu d'un poste 6 arrive dans le corps creux 47 par l'intermédiaire de la conduite 22, puis se trouve réparti vers les différents trous 50, avant d'être transmis dans les conduites 20, 21 par l'intermédiaire des différents éléments de raccordement 54.

Bien entendu, lorsqu'un élément de raccordement 54 n'est pas en position de fermeture, le clapet 51 correspondant demeure fermé.

Il est clair que les éléments de l'installation décrits précédemment et représentés sur les figures 1, 2, 3, 4 et 5, permettent de connecter chaque récipient 1 à deux postes 6, par l'intermédiaire des tableaux de pontage 9 et 10. De plus, chaque poste 6 peut être connecté simultanément à plusieurs récipients 1.

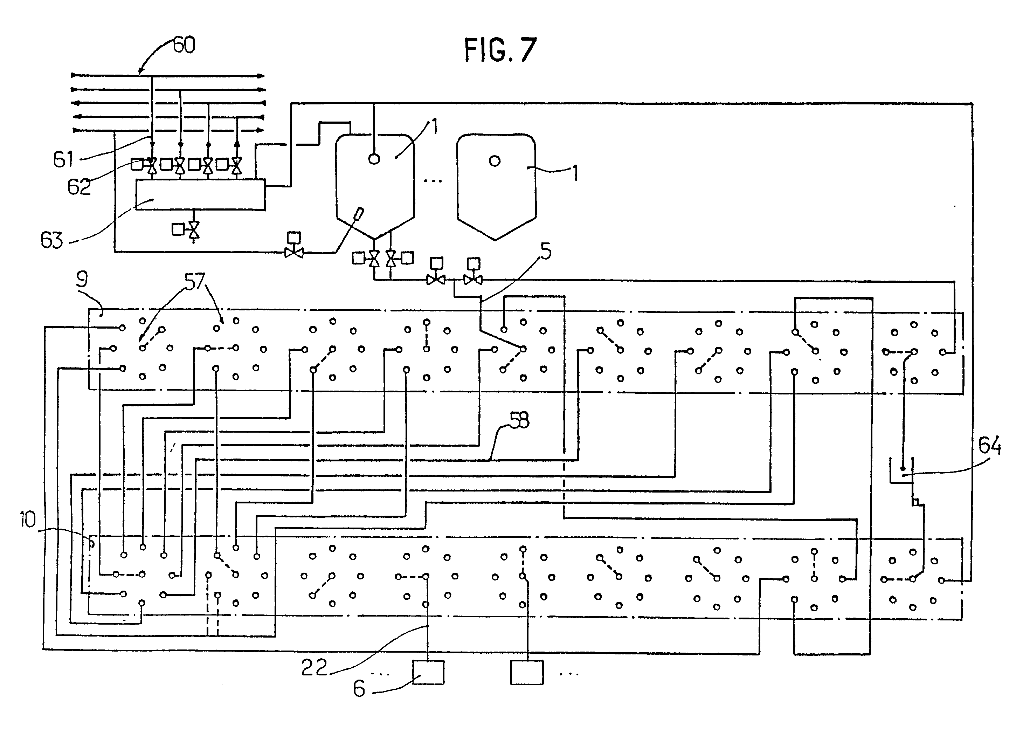

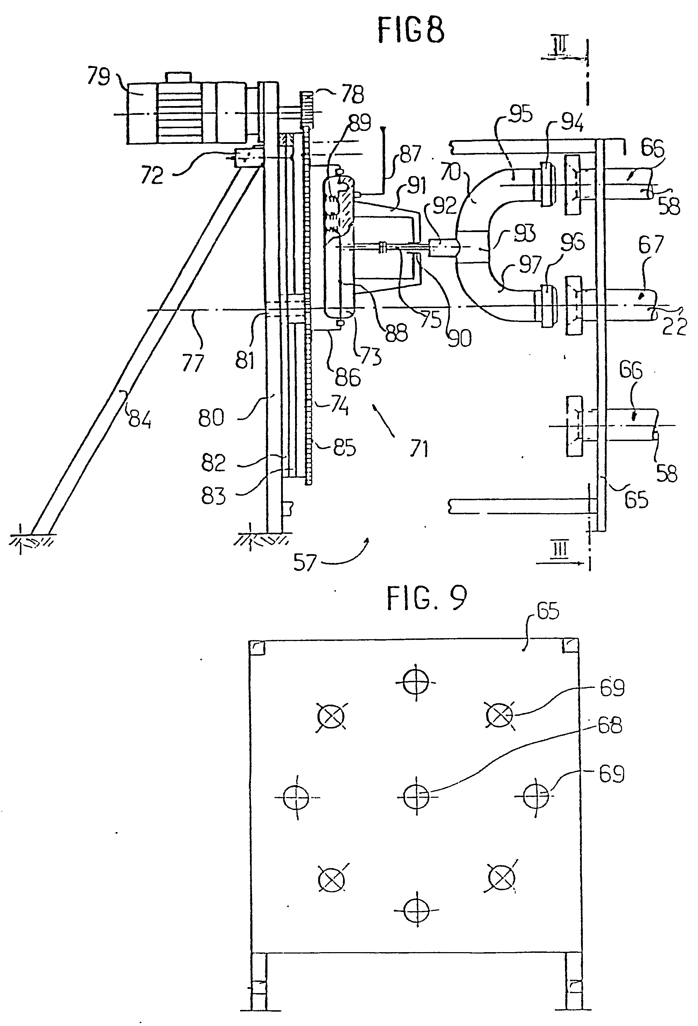

En pratique, lors de la fabrication de bière notamment, il n'est pas toujours nécessaire de prévoir un maximum de branchements simultanés, et l'installation peut d'ailleurs être considérablement simplifiée tel que représenté figures 6 et 7. Ceci permet également une simplification des dispositifs de branchement automatique, et l'on peut utiliser dans ce cas, des dispositifs de branchement tels que celui représenté figures 8 et 9.

Dans le mode de branchement représenté à la figure 6, chaque récipient 1 possède toujours une conduite de servitude 4 et une conduite de fonction 5 connectées à un poste 6 par l'intermédiaire des deux tableaux de pontage 9 et 10. Cependant, les tableaux de pontage 9 et 10 se composent dans ce cas de dispositifs de branchement automatique 57 ne permettant de relier que deux conduites simultanément. De ce fait, la conduite de servitude 4 du récipient 1 peut être connectée à un poste 6 fournissant une servitude par l'intermédiaire successivement, d'un dispositif de branchement automatique 57 du tableau de pontage 9, d'une conduite de liaison 58, puis d'un dispositif de branchement automatique 57 du tableau de pontage 10, et enfin d'une autre conduite de liaison 22. De même, la conduite de fonction 5 d'un récipient 1 est reliée à un autre poste 6 fournissant une fonction telle que, par exemple, la vidange de levure, par l'intermédiaire d'un dispositif de branchement automatique 57 du tableau de pontage 9, puis d'une conduite de liaison 58, d'un dispositif de branchement automatique 57 du tableau de pontage 10, et enfin d'une conduite de liaison 22.

Le branchement de l'installation selon la figure 6 possède par conséquent l'avantage d'une plus grande simplicité, mais convient plus particulièrement à des caves de brasserie dans lesquelles il est inutile de fournir simultanément une même fonction issue d'un poste 6 à plusieurs récipients 1 utilisateurs.

Dans certains cas qui relèvent de l'appréciation de l'Homme de Métier, il est possible d'opérer une simplification encore plus poussée de l'installation, en adoptant une configuration représentée figure 7.

A cet effet, l'ensemble des fonctions de servitude est fourni aux différents récipients 1 par l'intermédiaire d'une batterie de distribution des fluides de servitude, composée d'un ensemble de conduites 60. On opère sur ces conduites 60 un piquage direct à l'aide des conduites 61 munies de vannes 62, et aboutissant à une lanterne de barbotage 63 reliée aux récipients 1 correspondants.

De cette façon, les fonctions de servitude telles que la mise en pression des gaz, la récupération des gaz carboniques, l'échappement des gaz, etc... sont dérivés à partir des conduites 60 et amenées directement à chaque récipient 1 sans utiliser d'infrastructure commune comme décrit précédemment.

Il est à noter par ailleurs que conformément aux branchements représentés figure 6, les tableaux de pontage 9 et 10 regroupent un ensemble de dispositifs de branchements automatiques 57 décrits plus en détail ci-après.

Il est à noter en outre que, de même que dans le branchement représenté figure 6, chaque poste 6 relié à un dispositif de branchement automatique 57 du tableau de pontage 10, ne peut être relié à un instant déterminé qu'à un seul dispositif de branchement automatique 57 du tableau de pontage 9, et par suite, à un seul récipient 1.

Ce mode de branchement ne peut donc pas assurer l'arrivée simultanée de plusieurs fonctions sur un récipient 1, exceptées celles correspondant aux seules fonctions de servitude à l'exclusion cependant de la fonction de lavage et nettoyage, qui nécessite l'utilisation d'une pompe 64.

Pour la mise en oeuvre des branchements tels que schématisés sur les figures 6 et 7, il est avantageux de disposer de dispositifs de branchements automatiques simplifiés 57, tels que représentés sur les figures 8 et 9.

Chaque dispositif de branchement automatique 57 utilisé selon le procédé de connexion décrit précédemment comporte, selon une des caractéristiques de l'invention, des moyens de positionnement 65 des extrémités 66, 67 des conduites respectives 58 et 22.

Lesdits moyens de positionnement sont avantageusement constitués par le support 65 dans lequel sont pratiqués des trous 68, 69 permettant le positionnement des extrémités 67 et 66 des conduites 22 et 58. Selon l'invention, les trous 69 sont disposés sur un cercle concentriquement au trou central 68. De ce fait, les extrémités 66 des conduites 58 peuvent être aisément reliées successivement à l'extrémité 67 de la conduite 22, et ceci à l'aide d'un même élément de liaison.

A cet effet, cet unique élément de liaison est constitué par un élément de raccordement 70 en forme de "U", analogue aux éléments de raccordement 30, 31 et 54 visibles sur les figures 4 et 5. Cependant, dans ce dernier cas, cet élément de raccordement 70 est mû en rotation et en translation par l'intermédiaire de moyens moteurs 71 coopérant avec un détecteur de position 72.

Plus précisément, les moyens moteurs 71 sont constitués, d'une part, par un vérin 73 et, d'autre part, par une roue dentée 74 solidaire du vérin 73. Celui-ci actionne l'élément de raccordement 70 selon une translation parallèle aux conduites 58 ou 22, par l'intermédiaire d'un piston 75 solidaire dudit élément de raccordement 70, alors que la roue dentée 74 est mue en rotation autour d'un axe de rotation 77 par l'intermédiaire d'un pignon 78, entraîné par un moteur quelconque, notamment un moteur électrique 79.

A cet effet, la roue dentée 74 est montée sur un support 80 par l'intermédiaire d'un moyeu 81. Sur ce moyeu 81 sont montés en outre un grain fixe 82 et un grain mobile 83 coopérant avec le détecteur de position 72. Celui-ci permet l'asservissement de la position angulaire de la roue dentée 74, et par conséquent, de l'élément de raccordement 70.

Le support 81 est maintenu par des bras de renfort 84. La roue dentée 74 comporte sur sa surface avant 85 un vérin hydraulique ou pneumatique 73, solidarisé avec la roue dentée 74, à l'aide de bras de fixation 86.

Le vérin 73 est actionné par un fluide de commande arrivant dans un conduit 87 et provoquant la déformation de la soupape 88, cette soupape 88 étant ramenée en position initiale par des ressorts 89, lorsque le vérin 73 n'est plus actionné. Ce vérin 73 comporte, par ailleurs, solidaire de la soupape 88, un piston 75 guidé horizontalement dans un palier 90 aménagé dans un support quelconque 91 solidaire du vérin 73. L'extrémité 92 du piston 75 est solidarisée par un moyen quelconque au milieu 93 de l'élément de raccordement 70.

Ainsi, lors du fonctionnement du dispositif de branchement automatique 57, la rotation de la roue dentée 74 autour de l'axe de rotation 77 a pour conséquence de faire défiler le clapet 94 fixé sur la branche 95 de l'élément de raccordement 70 devant les différents trous 69, alors que le clapet 96 fixé sur la branche 97 de l'élément de raccordement 70, reste toujours en face d'un trou central 68.

En fonction des informations données à une centrale de commande (non représentée) par le détecteur de position 72, la roue dentée 74 s'arrête dans une position telle que l'élément de raccordement 70 possède son clapet 94 en face d'un trou 69, et l'autre clapet 96 en face d'un trou 68.

Puis, la commande du vérin 73 permet d'appliquer l'élément de raccordement 70 sur les clapets dont sont pourvues les extrémités des conduites 58 et 22 positionnées dans lesdits trous 68 et 69, ou au contraire de l'en éloigner lorsque le vérin 73 n'est plus actionné.

De cette manière, peuvent se réaliser de façon simple, fiable et automatique, les connexions entre une conduite 58 ou 59 (figures 6 et 7) et une conduite 22 arrivant sur l'un des tableaux de pontage 9 ou 10.

Il est à noter que l'on n'est pas tenu aux mes de branchements apparaissant sur les figures 1, 6 et 7, et il est aisé d'effectuer un panachage des dispositifs de branchements automatiques 7, 8 ou 57 utilisés sur un même tableau de pontage, en fonction des besoins de la cave à équiper.

Par ailleurs, en cas de changement des dimensions de la conduite de l'installation, il n'est pas nécessaire de procéder au remplacement d'un grand nombre de vannes, il suffit à ce moment là de procéder au remplacement des éléments de raccordement 30, 31, 54 ou 70.

## Revendications

1. Dispositif de branchement pour la mise en service de récipients de grande contenance d'une installation de stockage et/ou de traitement de liquides alimentaires ou autres, notamment de bière, cette installation comportant par ailleurs un réseau de conduites de liaison entre lesdits récipients, des appareillages fournissant les fonctions de servitudes et d'utilisation auxdits récipients, des moyens de positionnement (11, 12, 65) des extrémités (13, 14, ... 19, 66, 67) desdites conduites de liaison (4, 5, 20, 21, 22, 58), coopérant avec des moyens de raccordement automatique (23, 24, 70) d'un orifice d'une conduite (20, 21, 58) avec un orifice d'une autre conduite (4, 5, 22), dispositif de branchement caractérisé par le fait que lesdits moyens de positionnement (11, 12, 65) des extrémités (13, 14, ... 19, 66, 67) de chaque conduite de liaison (4, 5, 20, 21, 22, 58) sont constitués par des supports (25, 46, 65) pourvus de trous (26, 28, 29, 48, 49, 50, 68, 69) disposés dans un même plan vertical, et où lesdites extrémités sont engagées et immobilisées, les trous (26) étant disposés selon deux demi-cercles entourant deux trous centraux (28) et (29), et recevant respectivement les extrémités (14, 15) des conduites de servitude (4) et des conduites de fonction (5), et les extrémités (13, 16) des conduites de liaison (20, 21).

2. Dispositif de branchement selon la revendication 1, dans lequel le support de positionnement (46) du dispositif de branchement automatique (8) comporte un corps creux (47) pourvu de trous (49) et de trous (50) disposés concentriquement autour d'un trou central (48) relié à un poste (6) par l'intermédiaire d'une conduite (22).

3. Dispositif de branchement selon la revendication 1, dans lequel le support de positionnement (65) du dispositif de branchement (57) est pourvu de trous (68, 69) permettant le positionnement des extrémités (66, 67) des conduites (58), lesdits trous (69) étant disposés sur un cercle concentriquement au trou central (68).

4. Dispositif de branchement selon la revendication 1, dans lequel lesdits moyens de raccordement automatique (23) du dispositif de branchement automatique (7) sont constitués par deux éléments de raccordement (30) et (31) en forme de "U" dont les branches ($30_1$, $31_1$, $30_2$, $31_2$) sont pourvues de clapets (32, 33, 34, 35) coopérant avec les orifices des conduites (20, 4, 5, 21), lesdits éléments de raccordement (30, 31) étant mobiles et actionnés automatiquement par des moyens moteurs (38).

5. Dispositif de branchement selon les revendications 1 et 4, dans lequel lesdits moyens moteurs (38) actionnant les éléments de raccordement (30) et (31) sont constitués d'une part, par un vérin d'étanchéité (39) actionnant lesdits éléments de raccordement selon une translation parallèle aux différentes conduites (20, 4, 5, 21) par l'intermédiaire d'un élément de guidage (40), et, d'autre part, par deux vérins de positionnement (41) et (42) assurant la rotation desdits éléments de raccordement (30) et (31) respectivement autour de leur axe de rotation (36) et (37).

6. Dispositif de branchement selon la revendication 1, dans lequel lesdits moyens de raccordement automatique (24) du dispositif de branchement automatique (8) sont constitués par des éléments de raccordement (54) en forme de "U", mobiles et actionnés automatiquement en fonction des branchements à effectuer deux à deux entre les orifices des conduites (20) et (22), d'une part, et entre les orifices des conduites (21) et (22), d'autre part, par des vérins (55) animant lesdits éléments de raccordement (54) en translation, parallèlement aux différentes conduites (20, 21, 22).

7. Dispositif de branchement selon la revendication 1, dans lequel lesdits moyens de raccordement automatique (70) du dispositif de branchement automatique (57) sont constitués par un élément de raccordement (70) en forme de "U", muni sur les branches (95, 97) de clapets (94, 96), ledit élément de raccordement (70) étant actionné automatiquement, en fonction du branchement à effectuer entre l'orifice de la conduite (22) et l'orifice de l'une des conduites (58), par des moyens moteurs (71).

8. Dispositif de branchement selon les revendications 1 et 7, dans lequel lesdits moyens moteurs (71) de l'élément de raccordement (70) sont constitués, d'une part, par un vérin (73), actionnant ledit élément de raccordement (70) selon une translation parallèlement aux conduites (22, 58) par l'intermédiaire d'un piston (75), et, d'autre part, par une roue dentée (74), solidaire du vérin (73) et mue en rotation autour d'un axe de rotation (77) par l'intermédiaire d'un pignon (78) entraîné par un moteur électrique (79).

9. Dispositif de branchement selon la revendication 8, dans lequel ladite roue dentée (74) est montée sur un support (80) par l'intermédiaire d'un moyeu (81), sur lequel sont montés, en outre, un grain fixe (82) et un grain mobile (83) coopérant avec un détecteur de position (72) pour l'asservissement de la position angulaire de la roue dentée (74) et de l'élément de raccordement (70).

10. Dispositif de branchement selon la revendication 1, dans lequel, lors de sa mise en oeuvre, plusieurs dispositifs de branchements automatiques (7, 8, 57) sont regroupés pour former, d'une part, un tableau de pontage (9) connecté aux différents récipients (1) par l'intermédiaire des conduites (4, 5) et, d'autre part, un tableau de pontage (10) connecté aux différents postes (6) par l'intermédiaire des conduites (22), les dispositifs de branchement automatique (7, 8, 57) du tableau de pontage (9) étant, en outre, reliés à ceux du tableau de pontage (10) par des conduites (20, 21, 58).

**Patentansprüche**

1. Schaltervorrichtung zum Starten von grossen Behältern einer Lager- und/oder Behandlungsanlage für flüssige Lebensmittel oder andere Flüssigkeiten, insbesondere für Bier, wobei diese Anlage ausserdem ein Netz von Verbindungsleitungen zwischen den vorerwähnten Behältern, Geräte für die Bedienungs- und Einsatzfunktionen an den vorerwähnten Behältern, Mittel zum Positionieren (11, 12, 65) der Enden (13, 14, ... 19, 66, 67) der vorerwähnten Verbindungsleitungen (4, 5, 20, 21, 22, 58) umfasst, die mit Mitteln für den automatischen Anschluss (23, 24, 70) einer Öffnung einer Leitung (20, 21, 58) an eine Öffnung einer anderen Leitung (4, 5, 22) zusammenwirken, Schaltervorrichtung dadurch gekennzeichnet, dass die vorerwähnten Positionierungsmittel (11, 12, 65) der Enden (13, 14, ... 19, 66, 67) jeder Verbindungsleitung (4, 5, 20, 21, 22, 58) aus Halterungen (25, 46, 65) bestehen, die mit Löchern (26, 28, 29, 48, 49, 50, 68, 69) versehen sind, die sich in einer gleichen senkrechten Ebene angeordnet befinden, und wo die vorerwähnten Enden eingeführt und blockiert sind, wobei die Löcher (26) gemäss zwei Halbkreisen angeordnet sind, die zwei mittige Löcher (28) und (29) umschliessen, und jeweils die Enden (14, 15) der Bedienungsleitungen (4) und der Funktionsleitungen (5) aufnehmen, und die Enden (13, 16) der Verbindungsleitungen (20, 21).

2. Schaltervorrichtung gemäss Anspruch 1, wobei die Halterung zum Positionieren (46) der automatischen Schaltervorrichtung (8) einen Hohlkörper (47) aufzeigt, der mit Löchern (49) und mit Löchern (50) versehen ist, die konzentrisch um ein mittiges Loch (48) angeordnet sind, das über eine Leitung (22) mit einer Stelle (6) verbunden ist.

3. Schaltervorrichtung gemäss Anspruch 1, wobei die Halterung zum Positionieren (65) der Schaltervorrichtung (57) mit Löchern (68, 69) versehen ist, die das Positionieren der Enden (66, 67) der Leitungen (58) ermöglichen, wobei die vorerwähnten Löcher (69) auf einem Kreis konzentrisch zum mittigen Loch (68) angeordnet sind.

4. Schaltervorrichtung gemäss Anspruch 1, wobei die vorerwähnten Mittel für den automatischen Anschluss (23) der automatischen Schaltervorrichtung (7) aus zwei U-förmigen Anschlussgliedern (30) und (31) bestehen, deren Schenkel $(30_1, 30_2, 31_1, 31_2)$ mit Klappen (32, 33, 34, 35) versehen sind, die mit den Öffnungen der Leitungen (20, 4, 5, 21) zusammenwirken, wobei die vorerwähnten Anschlussglieder (30, 31) beweglich sind und von Motormitteln automatisch betätigt werden.

5. Schaltervorrichtung gemäss Anspruch 1 und 4, wobei die vorerwähnten Motormittel (38), die die Anschlussglieder (30) und (31) betätigen, einerseits aus einer Dichtungswinde (39) bestehen, die die vorerwähnten Anschlussglieder gemäss einer geradlinigen Bewegung betätigt, die parallel zu den verschiedenen Leitungen (20, 4, 5, 21) über ein Führungsglied (40) verläuft, und andererseits, aus zwei Positionierungswinden (41) und (42), die für die Drehbewegung der vorerwähnten Anschlussglieder (30) und (31), respektive um ihre Drehachse (36) und (37) sorgen.

6. Schaltervorrichtung gemäss Anspruch 1, wobei die vorerwähnten Mittel für den automatischen Anschluss (24) der automatischen Schaltervorrichtung (8) aus U-förmigen Anschlussgliedern (54) bestehen, die beweglich sind und automatisch in Abhängigkeit zu den auszuführenden Schaltungen zwei um zwei zwischen den Öffnungen der Leitungen (20) und (22), einerseits, und zwischen den Öffnungen (21) und (22), andererseits, durch Winden (55) betätigt werden, die diese vorerwähnten Anschlussglieder (54) in geradliniger Bewegung parallel zu den verschiedenen Leitungen (20, 21, 22) bewegen.

7. Schaltervorrichtung gemäss Anspruch 1, wobei die vorerwähnten Mittel zum automatischen Anschliessen (70) der automatischen Schaltervorrichtung (57) aus einem U-förmigen Anschlussglied (70) bestehen, das an den Schenkeln (95, 97) mit Klappen (94, 96) versehen sind, wobei das vorerwähnte Anschlussglied (70) automatisch und in Abhängigkeit der zwischen der Öffnung der Leitung (22) und der Öffnung einer der Leitungen (58) auszuführenden Schaltung von Motormitteln (71) betätigt wird.

8. Schaltervorrichtung gemäss Anspruch 1 und 7, wobei die vorerwähnten Motormittel (71) des Anschlussgliedes (70) einerseits, aus einer Winde (73) bestehen, die das vorerwähnte Anschlussglied (70) gemäss einer geradlinigen Bewegung parallel zu den Leitungen (22, 58) über einen Kolben (75) betätigt und, andererseits, aus einem Zahnrad (74), das an der Winde (73) befestigt ist und über ein Ritzel (78) drehend um eine Drehachse (77) bewegt wird, wobei dieses Ritzel von einen Elektromotor (79) angetrieben wird.

9. Schaltervorrichtung gemäss Anspruch 8, wobei das vorerwähnte Zahnrad (74) auf einer Halterung (80) über eine Nabe (81) aufgebaut ist, an der ausserdem ein feststehendes Korn (82) und ein bewegliches Korn (83) angebracht sind, die mit einem Positionsanzeiger (72) im Hinblick auf die Regelung der Winkelstellung des Zahnrades (74) und des Anschlussgliedes (70) zusammenwirken.

10. Schaltervorrichtung gemäss Anspruch 1, wobei zu ihrer Inbetriebnahme mehrere automatische Schaltervorrichtungen (7, 8, 57) zusammengefügt werden um, einerseits, eine Überbrückungstafel (9) zu bilden, die an die verschiedenen Behälter (1) über Leitungen (4, 5) angeschlossen ist und, andererseits, eine Überbrückungstafel (10), die an die verschiedenen Stellen (6) über Leitungen (22) angeschlossen ist, wobei die automatischen Schaltervorrichtungen (7, 8, 57) der Überbrückungstafel (9) ausserdem über Leitungen (20, 21, 58) an diejenigen der Überbrückungstafel (10) angeschlossen sind.

## Claims

1. Switching means for putting into service large containers of a storage and/or treatment installation for liquid foods or the like, in particular beer, said installation moreover comprising a network of pipes connecting the said containers, devices providing the service and use functions of the said containers, and means (11, 12, 65) for positioning the ends (13, 14, ... 19, 66, 67) of the said connecting pipes (4, 5, 20, 21, 22, 58), cooperating with means (23, 24, 70) for automatically connecting an orifice of a pipe (20, 21, 58) with an orifice of another pipe (4, 5, 22), said switching means characterised in that the said means (11, 12, 65) for positioning the ends (13, 14, ... 19, 66, 67) of each connecting pipe (4, 5, 20, 21, 22, 58) are formed by supports (25, 46, 65) provided with holes (26, 28, 29, 48, 49, 50, 68, 69) positioned in the same vertical plane, and in which the said ends are engaged and fixed, the holes (26) being arranged in two semi-circles encircling two central holes (28) and (29), and receiving respectively the ends (14, 15) of the service pipes (4) and the function pipes (5), and the ends (13, 16) of the connecting pipes (20, 21).

2. Switching means according to claim 1, characterised in that the positioning support (46) of the automatic switching means (8) comprises a hollow body (47) provided with holes (49) and holes (50) arranged concentrically around a central hole (48) connected to a station (6) by means of a pipe (22).

3. Switching means according to claim 1, characterised in that the positioning support (65) of the switching means (57) is provided with holes (68, 69) for positioning the ends (66, 67) of the pipes (58), the said holes (69) being arranged in a concentric circle around the central hole (68).

4. Switching means according to claim 1, characterised in that the said automatic connecting means (23) of the automatic switching means (7) are formed by two U-shaped connecting elements (30) and (31), the branches ($30_1$, $31_1$, $30_2$, $31_2$) of which are provided with valves (32, 33, 34, 35) cooperating with the orifices of the pipes (20, 4, 5, 21), the said connecting elements (30, 31) being movable and actuated automatically by drive means (38).

5. Switching means according to claims 1 and 4, characterised in that the said drive means (38) actuating the connecting elements (30, 31) are formed, on the one hand, by a sealing jack (39) actuating the said connecting elements so that they move in translation parallel to the different pipes (20, 4, 5, 21) via a guide element (40), and, on the other hand, by two positioning jacks (41) and (42) ensuring the rotation of the said connecting elements (30) and (31) about their respective axes of rotation (36) and (37).

6. Switching means according to claim 1, characterised in that the said automatic connecting means (24) of the automatic switching means (8) are formed by moving U-shaped connecting elements (54) actuated automatically according to the switching to be effected, in pairs, between the orifices of the pipes (20) and (22), on the one hand, and between the orifices of the pipes (21) and (22), on the other hand, by the jacks (55) actuating the said connecting elements (54) so that they move in translation parallel to the different pipes (20, 21, 22).

7. Switching means according to claim 1, characterised in that the said automatic connecting means (70) of the automatic switching means (57) are formed by a U-shaped connecting element (70) provided on the branches (95, 97) of the valves (94, 96), the said connecting element (70) being actuated automatically by the drive means (71) according to the switching to be effected between the orifice of the pipe (22) and the orifice of one of the pipes (58).

8. Switching means according to claims 1 and 7, characterised in that the said drive means (71) of the connecting element (70) are formed, on the one hand, by a jack (73) actuating the said connecting element (70) so that it moves in translation parallel to the pipes (22, 58) by means of a piston (75), and, on the other hand, by a toothed wheel (74), integral with the jack (73) and moved in rotation about an axis of rotation (77) via a pinion (78) driven by an electric motor (79).

9. Switching means according to claim 8, characterised in that the said toothed wheel (74) is mounted on a support (80) by means of a hub (81), on which are also mounted a fixed bushing (82) and a moving bushing (83) cooperating with an angle sensor (72) in order to control the angular position of the toothed wheel (74) and the connecting element (70).

10. Switching means according to claim 1, characterised in that, when it is put into operation, a number of automatic switching means (7, 8, 57) are grouped together in order to form, on the one hand, a bridging table (9) connected to the different containers (1) by means of the pipes (4, 5), and, on the other hand, a bridging table (10) connected to the different stations (6) by means of the pipes (22), the automatic switching means (7, 8, 57) of the bridging table (9) moreover being connected to those of the bridging table (10) by the pipes (20, 21, 58).

FIG. 4

FIG. 5

FIG. 1

FIG. 2

FIG. 3

EP 0 208 640 B1

FIG. 6

FIG.7

# FIG8

# FIG. 9